# EUROPEAN PATENT APPLICATION

(11) **EP 4 671 391 A1**
(43) Date of publication of application: **31.12.2025**
(21) Application number: 24788079.2
(22) Date of filing: 10.04.2024
(51) Int. Cl.: C21D 7/00, C21D 10/00, C22F 1/00, A63C 1/30, C21D 9/18

(54) **MULTI-FIELD COMPOSITE STRENGTHENING METHOD FOR EDGE OF ICE SKATE BLADE**

(30) Priority: 11.04.2023 CN 202310379654
(71) Applicant: Avic Manufacturing Technology Institute, Chaoyang District, Beijing 100024 (CN)
(72) Inventor: ZOU, Shikun, Beijing 100024 (CN); XU, Ming, Beijing 100024 (CN); WU, Junfeng, Beijing 100024 (CN); SUN, Rujian, Beijing 100024 (CN); CHE, Zhigang, Beijing 100024 (CN)
(74) Representative: Bandpay & Greuter
(86) International application number: PCT/CN2024/086909
(87) International publication number: WO 2024/212977

(57) **Abstract**

The present invention relates to the technical field of surface strengthening for sports equipment, and specifically to a method for multi-field coupling strengthening of an ice skate blade edge. The method includes the following steps: adjusting the laser head so that the laser beam covers the top surface and chamfer of the ice skate blade edge; adjusting the ultrasonic rolling device so that the rolling heads are positioned on both sides of the ice skate blade edge; determining the required laser energy and rolling force according to the material properties of the ice skate blade edge; simultaneously performing laser shock peening and dual-side opposing ultrasonic rolling on the side surfaces of the ice skate blade edge. By combining laser shock peening on the top surface of the blade edge with dual-side opposing ultrasonic rolling, deformation and delamination can be avoided. Meanwhile, the coupling of multiple energy fields reduces the dynamic yield strength of the material, making it easier for the material to undergo plastic deformation and achieve strengthening effects, thereby achieving deeper residual compressive stress, which is particularly beneficial for enhancing the strengthening effect in the chamfer part.

## Description

### TECHNICAL FIELD

The present invention relates to the technical field of surface strengthening of sports equipment, and specifically relates to a method for multi-field coupling strengthening of an ice skate blade edge.

### BACKGROUND

The blade of an ice skate becomes extremely sharp after being sharpened. Generally, ice skate blades are made of metal materials, and they have a very narrow blade edge. The blade edge of a common ordinary ice skate blade is only 2 millimeters wide; even the blade edge of the widest figure ice skate blade does not exceed 4 millimeters, and speed skating ice skate blades are even as sharp as ordinary knives.

In addition, ice skaters need to frequently sharpen the ice skate blades to prevent the blade edges from becoming dull. Under normal circumstances, the blade edges of the ice skate blades need to be sharpened after 20 hours of skating.

Ice skate blades can be classified into carbon tool steel, stainless steel, high-speed tool steel, powder metallurgy materials, and coated materials. Ice skate blades made of carbon tool steel are usually used by beginners. The quality of ice skate blades mainly depends on their carbon content. Although ice skate blades used in the same sport all meet the same hardness standard, due to differences in steel grades, under the same conditions, higher-grade steel allows the ice skate blade edges to maintain a longer service life.

Ice skate blades can be roughly classified into three categories according to their structure and sports characteristics: speed skating ice skate blades, figure ice skate blades, and ice hockey ice skate blades. Although the three types of ice skate blades have differences, the principle of pushing off the ice while gliding is basically similar.

Speed skating ice skate blades can be classified into long-track speed skating ice skate blades and short-track speed skating ice skate blades. Long-track speed skating ice skate blades have a long blade body, small curvature of the blade edge, a large contact area between the blade edge and the ice surface, and a large turning radius, making them suitable for long-distance sliding on long tracks. Short-track speed skating ice skate blades have a short blade body, large curvature of the blade edge, a relatively small contact area with the ice surface, and a small turning radius, making them suitable for sliding on short tracks (500m~1000m). The blade body thickness is 1.4±0.1mm, and the hardness is HRC56~60.

Figure ice skate blades can be further classified into free figure ice skate blades, figure pattern ice skate blades, and ice dance figure ice skate blades according to ice movements, blade teeth, and blade body shape. Since figure skating primarily involves jumps and spinning steps, their difference from other ice skate blades lies in the front blade teeth, which ensure that when the ice skate blade tilts forward by 10 degrees, the bottommost tooth is allowed to touch the ice surface. The blade edges are relatively thick, the blade edge thickness of ordinary-grade figure ice skate blades is not less than 3.5mm, and that of high-grade figure ice skate blades is not less than 3.8mm. Their hardness is HRC56~60, with a short blade body and large curvature of the blade edge.

Ice hockey ice skate blades are classified into goaltender ice hockey ice skate blades and player ice hockey ice skate blades. Since players often need to make sudden stops and turns during the sport, the blade body requires high strength. The blade edge thickness is 2.8±0.1mm, and the blade edge is arc-shaped, with the straight middle portion not less than 80 mm.

The performance of the blade edge of an ice skate blade directly affects the wear resistance and fatigue performance of the ice skate blade. Ultrasonic rolling and laser shock peening are commonly used technologies in surface strengthening. Ultrasonic rolling can achieve excellent surface roughness and grain refinement effects, while laser shock peening can obtain deep residual compressive stress. Studies have shown that under ultrasonic vibration conditions, the dynamic yield strength of metals will decrease, which can lower the threshold of laser shock peening; under the same conditions, it can increase the plastic strain degree of metallic materials and obtain deeper residual compressive stress.

However, the depth of ultrasonic waves generated by ultrasonic rolling is relatively shallow, generally only 0.3 mm, and the area where ultrasonic rolling is applied cannot achieve combination with laser shock peening. Therefore, laser shock peening and ultrasonic rolling cannot realize coupling strengthening with temporal synchronization and spatial overlap; the process is generally first laser shock peening, followed by ultrasonic rolling strengthening.

### SUMMARY

### (1) Technical Problems to be Solved

The present invention mainly addresses the above issues and proposes a method for multi-field coupling strengthening of an ice skate blade edge, aiming to solve the problems of poor surface hardness, weak fatigue strength, and poor stress corrosion resistance of existing ice skate blade edge.

### (2) Technical Solution

To achieve the above object, the present invention provides a method for multi-field coupling strengthening of an ice skate blade edge, including the following steps:

Adjusting a laser head so that the laser beam covers the top surface and chamfer of the ice skate blade edge;

Adjusting an ultrasonic rolling device so that the rolling heads are located on both sides of the ice skate blade edge;

Determining the required laser energy and rolling force according to the material properties of the ice skate blade edge;

Simultaneously performing laser shock peening and dual-side opposing ultrasonic rolling on the side surfaces of the ice skate blade edge.

Further, the laser shock peening uses a rectangular or square laser spot, wherein the width of the laser spot covers the top surface and chamfer of the ice skate blade edge.

Further, when dual-side opposing ultrasonic rolling strengthening is performed on the side surfaces of the ice skate blade edge, the same control system is used to synchronize the loading force, amplitude, and frequency.

Further, the arrival time of the shock wave from the laser shock peening is consistent with the time when maximum pressure is applied by the dual-side opposing ultrasonic rolling strengthening.

Further, the range of ultrasonic rolling process parameters is as follows: amplitude of 0.1-2mm, frequency of 10-300Hz, speed of 0.1-10mm/s, and duration of 1-60min.

Further, the parameters of the laser shock peening treatment are as follows: laser power of 0.1-10kW, repetition frequency of 1-100Hz, laser pulse width of 0.1-10ms, and number of shocks of 1-10 times.

Further, a protective layer is formed on the top surface and side surfaces of the ice skate blade edge prior to laser shock peening and ultrasonic rolling strengthening.

Further, surface treatment is performed on the ice skate blade edge prior to laser shock peening and ultrasonic rolling strengthening.

### (3) Beneficial Effects

Compared with the existing technology, the method for multi-field coupling strengthening of an ice skate blade edge provided by the present invention enables simultaneous laser shock peening and dual-side opposing ultrasonic rolling. By leveraging the enhancement effect of multiple energy fields, the method increases the depth of residual compressive stress, reduces surface roughness, refines surface grains, enhances microhardness, and improves fatigue strength and stress corrosion resistance, etc.

### BRIEF DESCRIPTION OF THE DRAWINGS

Fig. 1 is a schematic diagram of a method for coupling strengthening of an ice skate blade disclosed in the present application.
Fig. 2 is a timing diagram of coupling strengthening disclosed in the present application.

Reference numerals in the figures: 1. Ice skate blade; 2. Ultrasonic rolling device; 2-1. Rolling head; 3. Laser shock peening device.

### DETAILED DESCRIPTION

The specific implementation of the present invention will be described in further detail below in conjunction with the accompanying drawings and examples. The following examples are used to illustrate the present invention but are not intended to limit the scope of the present invention.

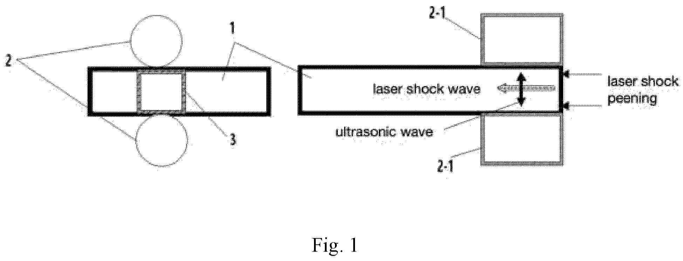

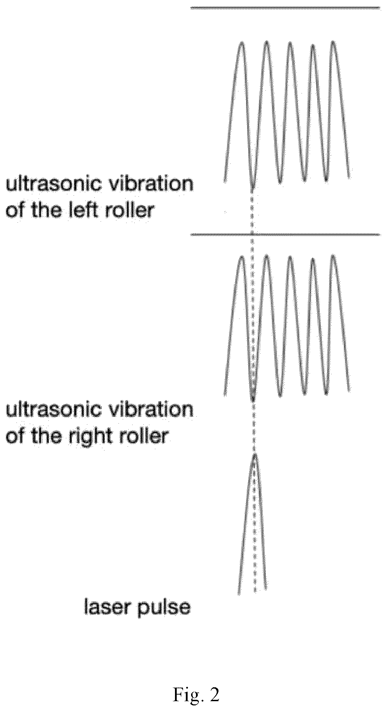

As shown in Fig. 1 and Fig. 2, a method for multi-field coupling strengthening of an ice skate blade edge of the present invention includes the following steps:

Preparation S100: Prepare the ice skate blade 1 and corresponding strengthening equipment including a laser shock peening device 3 and an ultrasonic rolling device 2. Determine the required laser energy and rolling force according to the material properties of the ice skate blade edge.

Adjusting the laser head and ultrasonic rolling device S200: Adjust the laser head to a suitable position so that the laser beam can cover the top surface and chamfer of the ice skate blade edge. Adjust the ultrasonic rolling device to a suitable position so that the rolling heads 2-1 are located on both sides of the ice skate blade edge.

Performing laser shock peening and ultrasonic rolling strengthening S300: Turn on the laser shock peening device and the ultrasonic rolling device, and strengthen the ice skate blade edge simultaneously. The laser beam forms a thin molten zone on the surface of the ice skate blade edge, enhancing the surface hardness and the wear resistance of the blade edge, while the rolling heads compress and plastically deform the side surfaces of the ice skate blade edge, further enhancing the hardness and strength of the blade edge. During the strengthening process, it is necessary to maintain the relative position between the laser shock peening and the ultrasonic rolling as well as the stability of strengthening parameters to ensure the consistency of strengthening effects.

Inspection and testing S400: After the strengthening is completed, inspect and test the ice skate blade edge to ensure that the strengthening effect meets the requirements. If necessary, the strengthening parameters can be adjusted to achieve better strengthening effects.

In the above embodiment, laser shock peening and ultrasonic rolling strengthening are performed simultaneously, which can effectively enhance the hardness and strength of the ice skate blade edge and improve its service life and performance.

It should be noted that, as shown in Fig. 1, the ice skate blade edge has an approximately right-angle structure with a very small chamfer size, and the entire cross-section is relatively regular. Therefore, the combination of the ultrasonic rolling and the laser shock peening can be realized structurally.

Specifically, laser shock peening can form a thin molten zone on the surface of the ice skate blade edge. This molten zone can cool quickly in a short time and form a strengthened layer, thereby enhancing the surface hardness and wear resistance of the blade edge. Ultrasonic rolling strengthening, on the other hand, can compress and plastically deform the side surfaces of the ice skate blade edge, further enhancing the hardness and strength of the blade edge. Since laser shock peening and ultrasonic rolling strengthening are performed simultaneously, deformation and delamination of the ice skate blade edge can be effectively avoided.

Both laser shock peening and ultrasonic rolling strengthening use different energy fields to strengthen materials, and the combination of multiple energy fields can achieve better strengthening effects. Laser shock peening can generate high temperature and high pressure, making it easier for materials to undergo plastic deformation and achieve strengthening effects; while ultrasonic rolling strengthening can generate high pressure and shear force, promoting plastic deformation and grain refinement of materials. The combination of the two strengthening methods can achieve deeper residual compressive stress, thereby enhancing the hardness and strength of the material.

In addition, the chamfered part of the ice skate blade edge is prone to damage and wear and requires special strengthening. The combination of laser shock peening and ultrasonic rolling strengthening can better strengthen the chamfered part, improving its wear resistance and service life.

Therefore, laser shock peening on the top surface of the blade edge combined with dual-side opposing ultrasonic rolling can avoid deformation and delamination. At the same time, the combination of multiple energy fields reduces the dynamic yield strength of the material, making it easier for the material to undergo plastic deformation and achieve strengthening effects, and realizing deeper residual compressive stress-this is particularly beneficial for the strengthening effect of the chamfered part.

In the present embodiment, laser shock peening adopts a rectangular or square laser spot with a width covering the top surface and chamfer of the ice skate blade edge. The main reason for using the rectangular or square laser spot in laser shock peening is to cover the top surface and chamfer of the ice skate blade edge, thereby forming a uniform residual compressive stress distribution on the surface of the ice skate blade edge. The use of the rectangular or square laser spot can ensure uniform distribution of laser energy on the surface of the ice skate blade edge, avoiding local overheating and overcooling during laser strengthening, thus improving the uniformity and stability of laser shock peening. In addition, the rectangular or square laser spot can better adapt to the shape and size of the surface of the ice skate blade edge, thereby improving the applicability and feasibility of laser shock peening.

In the present embodiment, when dual-side opposing ultrasonic rolling strengthening is performed on the side surfaces of the ice skate blade edge, the same control system is used to synchronize the loading force, amplitude, and frequency. This ensures that the pressure and amplitude applied to both sides during dual-side opposing ultrasonic rolling strengthening are the same, thereby avoiding deformation of the ice skate blade edge. If different control systems are used for dual-side opposing ultrasonic rolling, it is likely to cause different pressures on the two sides, resulting in uneven strengthening of the ice skate blade edge.

In the above ice skate blade edge strengthening method, two different processes-laser shock peening and ultrasonic rolling strengthening-are used in combination according to a certain sequence to achieve better strengthening effects. Specifically, in this method, better strengthening effects can be achieved when the arrival time of the shock wave from laser shock peening is synchronized with the time when the maximum pressure is applied by ultrasonic rolling.

This is because when the material of the ice skate blade edge is subjected to laser shock, the physical properties of the material change instantaneously, thereby forming high-strength compressive residual stress. If ultrasonic rolling is applied at this time, the compressive residual stress can penetrate deeper into the material, further improving the strengthening effect. However, if the arrival time of the shock wave from laser shock peening is not synchronized with the time when the maximum pressure is applied by ultrasonic rolling, the strengthening effect may be reduced, and even deformation of the ice skate blade edge may be caused. Therefore, ensuring time synchronization can better achieve synchronous enhancement. This coupling strengthening method can significantly improve the strength and hardness of the material while reducing material deformation and cracks.

In the strengthening method of the ice skate blade edge described in the present embodiment, the range of ultrasonic rolling process parameters is as follows: amplitude of 0.1-2mm, frequency of 10-300Hz, speed of 0.1-10mm/s, and duration of 1-60min.

The parameters of the laser shock peening treatment are as follows: laser power of 0.1-10kW, repetition frequency of 1-100Hz, laser pulse width of 0.1-10ms, and number of shocks of 1-10 times.

Before laser shock peening and ultrasonic rolling strengthening, a protective layer is formed on the top surface and side surfaces of the ice skate blade edge. The protective layer can be made of materials such as metals, ceramics, and polymers, and can be prepared by processes such as physical vapor deposition, chemical vapor deposition, ion plating, and electroplating. Since laser strengthening will cause thermal effects on the surface of the ice skate blade edge, it is prone to the generation of microcracks. Therefore, forming a protective layer during laser shock peening can effectively reduce thermal effects and the generation of microcracks, thereby improving the strength and wear resistance of the ice skate blade edge.

Before laser shock peening and ultrasonic rolling strengthening, surface treatment is performed on the ice skate blade edge. Surface treatment can remove oxides, greases, dirt, etc. from the surface of the ice skate blade edge before multi-field coupling strengthening, reduce the surface roughness of the ice skate blade, and enhance the flatness and cleanliness of the material surface, thereby making laser shock peening and ultrasonic rolling strengthening more uniform and effective. Surface treatment can be carried out by means of mechanical polishing, electrolytic polishing, shot peening, etc., and the specific method can be determined according to the material and surface condition of the ice skate blade edge.

To further reveal the nature of the present invention, the following examples describe the strengthening method of the present invention in detail. It should be understood that the present invention is not limited to the specific conditions or details stated in these examples, except for the limitations specified in the appended claims.

### Example 1

The method for multi-field coupling strengthening of an ice skate blade edge is used to treat an ice skate blade, with specific operations as follows:

First, adjust the laser head and ultrasonic rolling device so that they are located on the top surface and both sides of the ice skate blade edge respectively; determine the required laser energy and rolling force according to the material properties of the ice skate blade edge; then perform laser shock peening, using a rectangular laser spot with a width covering the top surface and chamfer of the ice skate blade edge, with a laser power of 5kW, repetition frequency of 50Hz, laser pulse width of 5ms, and number of shocks of 3 times; simultaneously perform dual-side opposing ultrasonic rolling strengthening on the side surfaces of the ice skate blade edge, using the same control system, with a loading force of 50N, amplitude of 1.5mm, frequency of 100Hz, speed of 5mm/s, and duration of 30min.

### Example 2:

Another ice skate blade is treated using the method for multi-field coupling strengthening of an ice skate blade edge, with specific operations as follows:

Similarly, adjust the laser head and ultrasonic rolling device so that they are located on the top surface and both sides of the ice skate blade edge respectively; determine the required laser energy and rolling force according to the material properties of the ice skate blade edge; perform laser shock peening, using a square laser spot with a width covering the top surface and chamfer of the ice skate blade edge, with a laser power of 3kW, repetition frequency of 20Hz, laser pulse width of 8ms, and number of shocks of 5 times; simultaneously perform dual-side opposing ultrasonic rolling strengthening on the side surfaces of the ice skate blade edge, using the same control system, with a loading force of 40N, amplitude of 1mm, frequency of 50Hz, speed of 2mm/s, and duration of 20min.

Both examples adopt the method for multi-field coupling strengthening of an ice skate blade edge, but different process parameters are used according to different materials and requirements of ice skate blade edges, such as laser power, frequency, pulse width, number of shocks, as well as ultrasonic rolling parameters like amplitude, frequency, speed, and duration. The parameters used in Example 1 are higher, resulting in a more significant strengthening effect on the ice skate blade edge, with a longer processing time; the parameters in Example 2 are relatively lower, suitable for ice skate blades with general requirements.

The above descriptions are only preferred embodiments of the present invention. It should be pointed out that for those skilled in the art, several improvements and modifications can be made without departing from the technical principles of the present invention, and these improvements and modifications should also be regarded as the protection scope of the present invention.

## Claims

1. A method for multi-field coupling strengthening of an ice skate blade edge, **characterized in that** it comprises the following steps:
adjusting a laser head so that the laser beam covers the top surface and the chamfer of the ice skate blade edge;
adjusting an ultrasonic rolling device so that the rolling heads are located on both sides of the ice skate blade edge;
determining the required laser energy and rolling force according to material properties of the ice skate blade edge; and
simultaneously performing laser shock peening and dual-side opposing ultrasonic rolling on side surfaces of the ice skate blade edge.

2. The method for multi-field coupling strengthening of an ice skate blade edge as claimed in Claim 1, **characterized in that** the laser shock peening uses a rectangular or square laser spot, wherein the width of the laser spot covers the top surface and the chamfer of the ice skate blade edge.

3. The method for multi-field coupling strengthening of an ice skate blade edge as claimed in Claim 1, **characterized in that** when the dual-side opposing ultrasonic rolling strengthening is performed on the side surfaces of the ice skate blade edge, the same control system is used to synchronize a loading force, an amplitude and a frequency.

4. The method for multi-field coupling strengthening of an ice skate blade edge as claimed in Claim 1 or 3, **characterized in that** the arrival time of the shock wave from the laser shock peening is consistent with the time when maximum pressure is applied by the dual-side opposing ultrasonic rolling strengthening.

5. The method for multi-field coupling strengthening of an ice skate blade edge as claimed in Claim 1, **characterized in that** the range of ultrasonic rolling process parameters is as follows: amplitude of 0.1-2 mm, frequency of 10-300 Hz, speed of 0.1-10 mm/s, and duration of 1-60 min.

6. The method for multi-field coupling strengthening of an ice skate blade edge as claimed in Claim 1, **characterized in that** the parameters of the laser shock peening treatment are as follows: laser power of 0.1-10 kW, repetition frequency of 1-100 Hz, laser pulse width of 0.1-10 ms, and number of shocks of 1-10 times.

7. The method for multi-field coupling strengthening of an ice skate blade edge as claimed in Claim 1, **characterized in that** a protective layer is formed on the top surface and side surfaces of the ice skate blade edge prior to laser shock peening and ultrasonic rolling strengthening.

8. The method for multi-field coupling strengthening of an ice skate blade edge as claimed in Claim 1, **characterized in that** surface treatment is carried out on the ice skate blade edge prior to laser shock peening and ultrasonic rolling strengthening.
